# EUROPEAN PATENT SPECIFICATION

(11) **EP 2 930 844 B1**
(45) Date of publication and mention of the grant of the patent: **04.07.2018**
(21) Application number: 14164178.7
(22) Date of filing: 10.04.2014
(51) Int. Cl.: H02P 29/02, H02H 7/08, H02P 3/06

(54) **SAFE TORQUE OFF PROCEDURE**
VERFAHREN FÜR SICHER ABGESCHALTETES MOMENT
PROCÉDURE D'ARRÊT DE COUPLE SANS DANGER

(43) Date of publication of application: 14.10.2015
(73) Proprietor: ABB Schweiz AG, 5400 Baden (CH)
(72) Inventor: Kangas, Ilpo, 00380 Helsinki (FI); Kekki, Antti-Ilmari, 00380 Helsinki (FI); Keski-Rahkonen, Olli, 00380 Helsinki (FI); Viitanen, Tero, 00380 Helsinki (FI)
(74) Representative: Kolster Oy Ab

(56) References cited:
- EP-A2- 2 385 623
- EP-B1- 2 220 757
- WO-A1-2004/107555
- ALLLEN-BRADLEY: "Guidelines for Use of Kinetix 2000 Drives in Category 3 Safe Torque Off Applications per EN954-1", APPLICATION NOTES OF ROCKWELL AUTOMATION - SAFETY-AT002B-EN-P,, 1 April 2007 (2007-04-01), pages 1-8, XP002512329,
- PETER WRATIL ED - ANONYMOUS: "Technology of safe Drives", INDUSTRIAL INFORMATICS, 2007 5TH IEEE INTERNATIONAL CONFERENCE ON, IEEE, PI, 1 July 2007 (2007-07-01), pages 155-161, XP031161785, ISBN: 978-1-4244-0850-4
- ABB: "Applikationsanleitung für die Funktion Sicher abgeschaltetes Moment Safe Torque Off (STO-Funktion)", ABB HANDBOOKS - ACSM1 FREQUENZUMRICHTER HANDBÜCHER,, vol. 3AUA0000023089, no. REV B / DE, 1 October 2007 (2007-10-01), pages 1-18, XP002512330,

## Description

### FIELD OF THE INVENTION

The present invention relates to electrical motor drives, and particularly to procedures in electrical motor drives in connection with machine safety.

### BACKGROUND OF THE INVENTION

Certain safety regulations and standards govern the electrical motor drives in various applications. An example of such a standard is IEC 61800-5-2 which defines Safe Torque Off -function (STO). STO brings the motor of the electrical drive to no-torque state each time the function activates. STO can be used as actuating procedure both in stopping of the motor (e.g. over heat protection, over speed protection or emergency stop of the motor) or in preventing undesired starting of the motor.

STO function can be implemented as a single channel or redundant architecture of two or more channels. The redundancy should be implemented in such a way that a single fault in the system does not disable the STO procedure from removing the torque from the motor. The redundancy helps in obtaining a higher level safety approval for the STO.

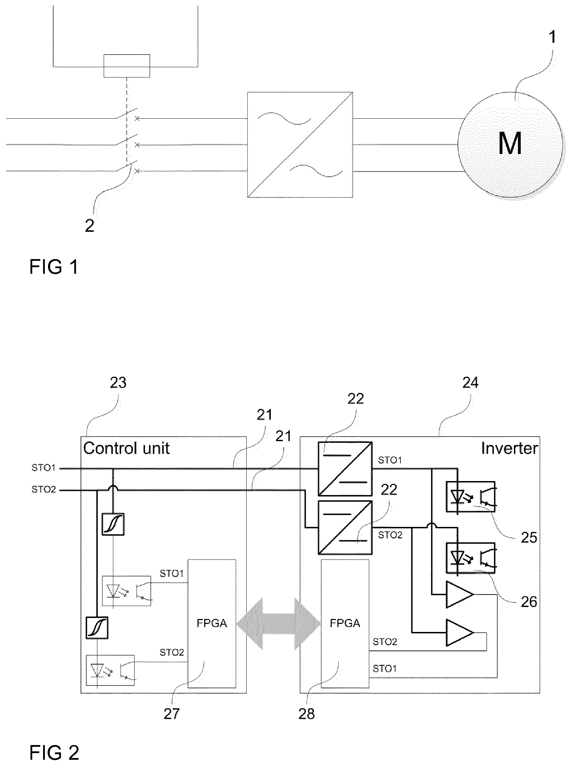

Figure 1 shows an example of a system capable to STO procedure. In this example a motor is separated from the supplying network by cutting off the power from the drive using electromechanical switch 2. The problems relating to the example of Figure 1 are the high costs involved and the implementation of redundancy only by using two separate electro-mechanic components. Further, even when redundancy is implemented, it is difficult to obtain desired protection against common-cause faults. Further, the procedure of Figure 1 does not take into account the energy stored inside the device, and therefore a torque can still be produced using this stored energy.

EP 2220757 B1 discloses an arrangement in which a safety module is included in a standard controller. The safety module has two independent switch-off paths for performing STO function.

More advanced STO procedure is shown in Figure 2 in which control unit of a motor drive receives STO signals ST01, ST02 and sends them to power module, such as inverter. The inverter receives the signals and based on the state of the signal, blocks the use of the power semiconductor components. This can be done, for example, by removing the gate pulses or by removing voltage supply from the gate drivers of the semiconductor components.

In the example of Figure 2, the ST01 and ST02 signals inputted to the control unit are inputted from the same source. The redundancy is obtained in the inverter when the signals initiate different protective action.

Further, in the example of Figure 2 the signals are fed via dedicated signal lines 21. These signal lines need to be approved both with electrical safety regulations and with machines functional safety standards. The signal lines include also electrical separation which are used for separating the low voltage of the control unit 23 from the higher voltages of the power unit 24. In view of machine safety, the approved connections are shown with thicker lines. The other parts of the circuit of Figure 2 relate to providing status information of the STO-procedure, i.e. indicating that the required operations are carried out. This communication is led through the commonly used signaling shown in Figure 2 as the double ended arrow between the FPGA blocks. In the example of Figure 2, the torque-free state is obtained by removing supply voltages from the gate drivers. This is carried out with blocks 25 and 26 such that block 25 removes voltages of the upper semiconductor switches and block 26 removes voltages from the lower semiconductor switches. The states of the signals ST01 and ST02 are fed also to the FPGA circuit 27 of the control unit and to the FPGA circuit 28 of the power unit. The state information from the STO signals is transmitted between the units for diagnosing the operation of the STO-functionality.

The drawback of both of the Figures 1 and 2 is that the use of STO-functionality may have unexpected consequences in the circuitry of inverter. The STO procedure operates as desired, but the abrupt removal of modulation pulses may lead to failure of power components in the inverter.

### BRIEF DESCRIPTION OF THE INVENTION

An object of the present invention is to provide a method and an arrangement for implementing the method so as to solve the above problem. The objects of the invention are achieved by a method and an arrangement which are characterized by what is stated in the independent claims. The preferred embodiments of the invention are disclosed in the dependent claims.

The invention is based on the idea of producing one or more safety-approved signals in the control unit of a motor drive. The one or more safety-approved signals are fed to the power unit, and upon receipt of the signals, the power unit initiates shut-down of the power unit in such a manner, that two different shut-down procedures are used. Further, these procedures are used at different time instants.

According to preferred embodiment of the invention, the shut-down procedure applied first is normal stop-procedure in which the power unit is shut down in controlled manner. The second shut down procedure is then a procedure leading to removing torque from the motor and ensuring that torque is not produced. Thus the procedure fulfils the requirements for a STO function.

In an embodiment the signal commanding a normal stop procedure is produced in the control unit and fed as non-safety-approved signal to the power unit(s), while in another embodiment the stop-signal is produced in the power unit(s) from the safety-approved signal(s) fed from the control unit.

An advantage of the present invention is that the STO-procedure does not lead to a situation in which the power module is shut-down abruptly. This ensures that the components of the power module are not damaged due to sudden removal of control. Further, as the one or more signals from the control unit are safety-approved, the same STO-functionality can be applied to different drive topologies without the need of re-design and approval procedures.

### BRIEF DESCRIPTION OF THE DRAWINGS

In the following the invention will be described in greater detail by means of preferred embodiments with reference to the accompanying drawings, in which
Figures 1 and 2 show known STO implementations;
Figure 3, 4, 5 and 7 show different embodiments of the invention; and
Figure 6 shows an embodiment with parallel power units.

### DETAILED DESCRIPTION OF THE INVENTION

According to method of the invention a safe torque off (STO) procedure is produced. The procedure is implemented in an electrical drive comprising a control unit and one or more power units. The invention may also be implemented in a drive with combined control and power units. In normal use of the electrical drive the control unit sends control information to the one or more power units. The control information may comprise reference values for current to be outputted from the power unit or torque to be produced by the electrical motor of the drive, for example. The control unit further processes different calculations relating to the control, such as different calculations relating to control of the motor.

The power unit comprises controllable semiconductor switches which are controlled according the control information sent by the control unit. The power unit is, for example, an inverter which powers a motor connected to the output of the power unit in a desired manner. The electrical drive may also comprise multiple of power units which are all controlled by a control unit. The outputs of the multiple of power units may be connected in parallel for driving a common load. The multiple of power units may also be separate systems each having their own load. As the STO procedure relates to setting a motor to a no-torque state, the power unit with semiconductor switches is a device that is able to control a motor.

The control unit and the power unit are connected to each other with any suitable communications connection that enable communication between the units. Such communications connections include, but are not limited to, galvanic connections, fibre links, communications buses and wireless communication.

According to the method, a signal requiring the drive to become in no-torque state is detected in the control unit. Multiple of signal paths from safety related sensors or the like may be led to the control unit depending on the application. Each of these paths or signals is monitored and once any one of the signals activates the motor should be made torqueless.

The detected signal originates for example from a safety related logic device that monitors a sensor. Such a sensor may be a presence sensor indicating that a person is present in a dangerous area or a sensor indicating that a safety related mechanical door or hatch is opened, for example. An example of other possible source of the signal is from emergency stop button. Any of these signals require that the motor in of the system is brought to a state in which the motor is not able to produce torque.

Further, according to method, on the basis of the detected signal at least one safety-approved signal is generated in the control unit. This signal initiates the shutting-down of the power unit once received in the power unit.

The safety approved signal referred above is a signal that fulfils the requirements set for the STO-procedure. Such signal may be led via any connection that has been safety-approved or fulfils the requirements for such approval. The signal may be a signal in any communications link, e.g. galvanic, fibre optic, wireless, ect., that is established between safety-approved devices.

According to an embodiment, the safety approved signal is a signal between safety-approved elements. Such elements are, for example, partly safety-approved field-programmable gate arrays (FPGA). Thus the control unit and the power units comprise a safely-approved device where a safety-approved link can be established between the control unit and the power units.

Safety-approved FPGAs are programmed using safety approved tools and measures, including safety-approved software for implementing safety-related functions and operations. A safety device utilizing such FPGAs can obtain safety-approval and the safe block in the FPGA can be frozen once approved such that the non-safe block of the FPGA can be programmed without requiring getting a re-approval for the safe side.

When the standard communication between the control unit and the power unit(s) is between the communication interfaces of FPGA:s, for example, the STO-command does not require any other communication connection. The STO-command is preferably encrypted in the safe-side of the FPGA and sent via standard communications channel in a so called "black channel". Black channel refers to communication in which regardless of the communications protocol used in standard communication, the critical communication is coded in a specific way and a set communication protocol is used. The communication in black channel is also safety-approved in the sense of the STO-functionality. When using black channel with encrypted signalling, the receiving power module decrypts the signal in the safety approved block of the unit, such as in FPGA.

The generated at least one safety-approved signal is fed to the one or more power units. As the power unit receives the at least one safety-approved signal, the shutting down of the power unit is started. According to the method, the signal initiates at least two different shut-down procedures of the power unit that received the signal. Further, the at least two procedures for shutting-down the power unit are performed at different time instants.

The first of the shut-down procedures that is applied at each of the power units is preferably a controlled shut-down procedure. The controlled shut-down procedure turns the power semiconductors of the power unit to OFF-state and stops the modulation according to a set procedure. In a two-level inverter the procedure is quite simple to implement by cutting the gate pulses to the power semiconductors at different time instants. In parallel-connected two-level inverters feeding a common load or in multilevel inverters the procedure is more complicated and individual power components are required to be shut-down in certain order. As power units typically contain a Stop-procedure that is followed in normal stopping of the device, this Stop procedure is used as a first procedure for shutting down the power unit when the safety-approved signal indicating transition to no-torque state is received.

The second of the shut-down procedures initiated by the signal indicating requirement for no-torque state is a procedure with which the power unit is made incapable of producing torque in the sense of STO-requirements. Once this second procedure is started, the power unit is already stopped with the normal stop procedure.

The second procedure, for example, cuts the supply voltages of the gate drivers of the power semiconductors of the power unit or cuts the modulation pulses from the power semiconductors. This second procedure is any known procedure that fulfils the STO-requirement.

The order of the shut-down procedures can be implemented as the normal Stop-procedure can be typically carried out in less than 50 microseconds and several milliseconds can be used to implement the torque-free state. As the time required for the normal stop-procedure is typically known, it is preferred to set a time delay for the second procedure such that the second procedure is started only after the first procedure has ended. However, the delay should not be so long that the no-torque state is achieved later than required.

As the normal shut-down procedure has ended prior to disabling the power unit, the power components of the power unit, such as inverter, are not damaged due to STO-command. This further improves the safety aspect as there is no danger of sudden break or even explosion of components due to high currents and voltages that are not controlled.

According to an embodiment of the invention the two shut-down procedures that are implemented in the power unit are both such procedures that lead to a safety-approved no-torque state. In such embodiment the torque-free state is obtained by any two known procedures that lead to STO-state. These procedures are, for example removing the gate pulses or auxiliary voltages. As mentioned above, in two-level inverters the risk of component failure is small, and therefore the Stop-signal is not necessarily required.

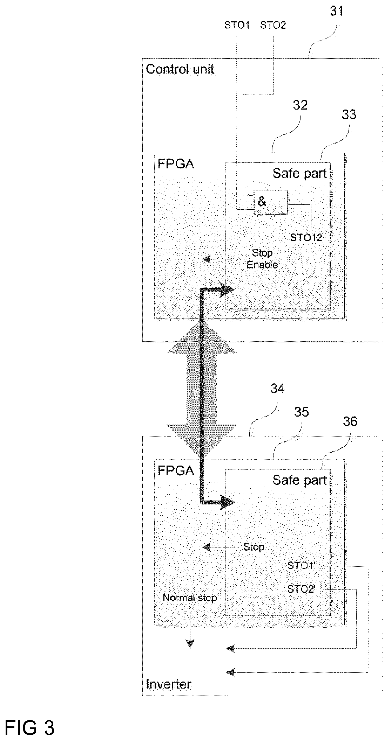

In the following the invention is described in connection with embodiments of the Figures 3, 4, 5 and 7.

In the embodiment of Figure 3, control unit 31 monitors signal lines ST01 and ST02. These signals are originated, for example, from emergency stop button or from safety-approved relay. In general, ST01 and ST02 signals or signal lines are from a source that monitors safety related functions such that when signal is absent from the line, the motor or motors of the system should be made torque-free.

The signal lines ST01, ST02 are fed to a FPGA circuit 32, and more specifically to a safety approved block 33 of the FPGA circuit. In the FPGA circuit the signals are fed to a logic AND function such that the signals from signal lines ST01, ST02 are combined to a single signal ST012 as the output of the AND circuit. Signal ST012 changes its state as soon as one or both of the signals ST01 or ST02 change their states.

In Figure 3, when the ST012 signal changes its state to indicate that either or both of signals ST01 or ST02 have changed its state, a stop signal is generated. Alternatively, enable signal is de-set to disable the power unit. The stop signal or enable signal are sent to the power unit together with the ST012 signal. The ST012 signal is sent from the safety block of the control unit to the safety block of the power unit together with the normal communication between the units in a black channel.

Once the ST012 and stop (or disable) signals are received in power unit 34, the power unit is shut down. The shut-down is performed by sending a Stop signal from the safety block 35 of the FPGA 36 and implementing a controlled stop of the device. Further, the safety block 35 produces signals ST01' and ST02' from the ST012 signal. These produced signals are used for producing the torque free state as required by the STO procedure. In an embodiment, the generation of the ST01' and ST02' signals are delayed such that before implementing the required operations, the power unit, such as inverter, is already stopped in controlled manner.

As with the Stop signal, the change of Enable signal to disable state performs a controlled stop of the power unit. The enable signal is used in a motor drive for allowing the operation of the drive. Thus enable signal is needed for the drive to be started and to continue the operation of the drive, e.g. producing torque to the motor.

It should be noted, that Stop or Enable can be used to bring the power unit to a no-torque state. However, such a no-torque state is not safety-approved in the sense of machine safety.

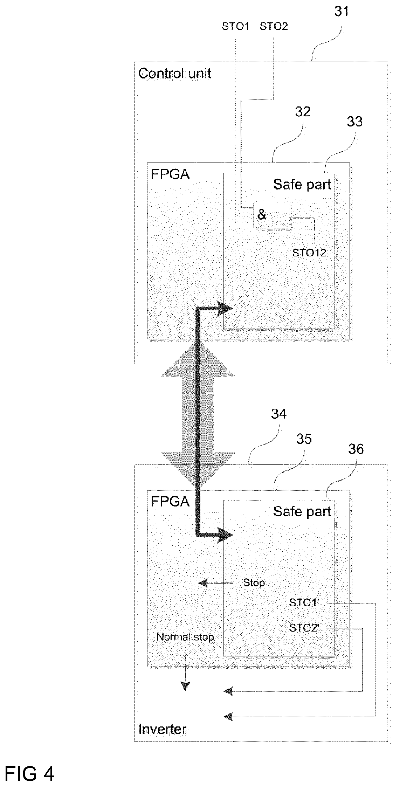

The embodiment of Figure 4 differs from the embodiment of Figure 3 in that in Figure 4 only the ST012 signal is encrypted in the black channel between the control unit and the power unit and the stop command is produced in safe part 36 of the power unit instead of safe part 33 of the control unit of Figure 3. Once the safety part of the FGPA of the power unit receives the ST012 signal for indicating the need for providing a no-torque state, the safety part forms a Stop signal for stopping the power unit in a controlled manner. After the operation has been stopped, the STO-requirement is fulfilled with desired action.

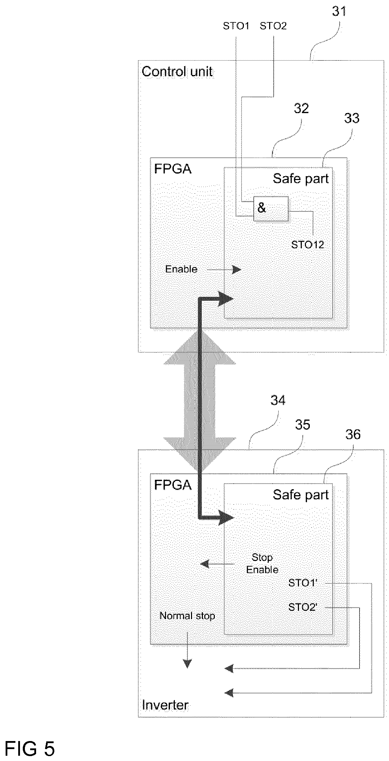

The embodiment of Figure 5 differs from the embodiment of Figure 3 in that the typically used Enable signal is fed from the non-safe side of FPGA of control unit to the safety approved side. Thus the enable signal used in normal operation to allow the operation of the drive, is used to stop the drive in case signals ST01 or ST02 change their state. Alternatively, the drive enable signal is integrated to the ST012 signal, thus ensuring that the torque producing operation is prevented whenever ST01 or ST02 change their state. Further, in the embodiment the signals ST012 and Enable are sent in the black channel between the units as in connection with the embodiment of Figure 3.

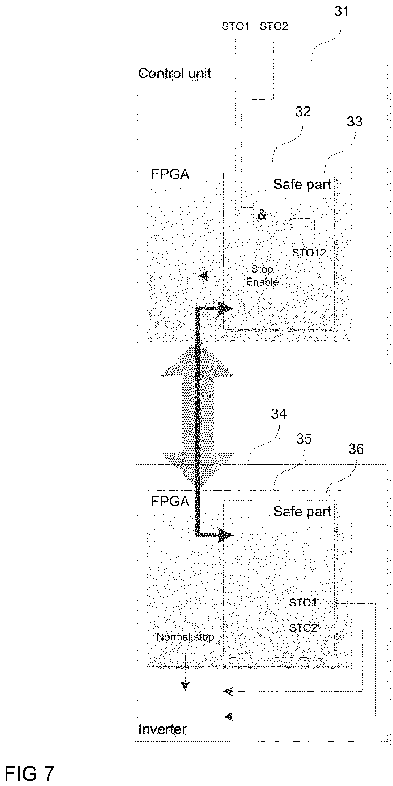

Figure 7 shows an embodiment in which Stop or Enable signal is generated in the safe part of the control unit 31 and communicated to the power unit using a non-safety approved communication route. In the embodiment the ST012 signal is communicated to the power unit using the black channel as in the previous embodiments.

In the above examples two STO signals are fed to the FPGA of the control unit. The two signals are given as examples and the number of STO-signals is not limited and the number is dependent on the use of the device.

Further, as a part of the requirement of the STO-functionality, the one or more power units communicate diagnostic data on state of the torque free operation state back to the control unit in similar manner as the control unit communicates to the power units. A pre-determined check message is also sent between the units as a part of the secure communication. If this message is not received by the units, then the operation of the power units are stopped and STO-functionality is applied automatically.

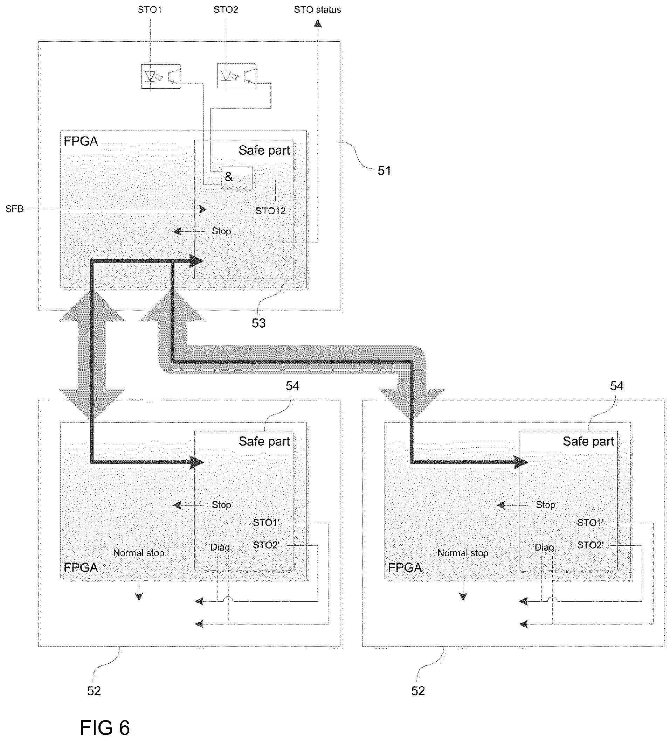

Figure 6 shows an embodiment of the invention in which one control unit 51 controls two parallel power units 52. The power units, such as inverters, are controlling separate loads or a common load with same control information. Safe torque off signals ST01 and ST02 are inputted to the control unit, and more specifically to the safety block 53 of a FPGA circuit. The STO signals are encrypted as a single ST012 signal as in previous examples. Further, in the example of Figure 6, a Stop signal is generated in the safety block of the FPGA. The Stop signal and the ST012 signals are communicated in the black channel together with the normal control information to the parallel power units 52.

ST012 and Stop signals are fed to the safety blocks 54 of the power units. Upon receipt of the signals the power units are switched off first by normal controlled stop procedure and after that with a procedure that leads to a torque free state.

Figure 6 shows how the safety block of the power units monitors the ST01' and ST02' signals generated by the secure block with Diag.-inputs. The monitored information is communicated in the black channel to the control unit, and the control unit outputs a STO status -signal indicating the operation of the STO functionality. Further in Figure 6 a safety field bus SFB is shown to be connected to the secure block of the FPGA of the control unit. The safety field bus may also contain STO information or activation signal used in generation of STO functionality.

The arrangement of the invention implements the method of the invention in such a manner that a simple structure is obtained. The method can be implemented in various types of drive systems requiring the use safe torque off - functionality. The implementation of the method in an arrangement leads to a structure in which the type of the power unit may be any known power unit suitable to be used in a drive system. The safety approved signal is led in a safety approved signal path to a safety approved part of the power unit. In the power unit the signal initiates a pre-determined and controlled stop operation and furthermore produces a second means for ensuring a no-torque state in the sense of the safety related regulations.

In the above, specific examples are described in connection with the drawings. The invention is not limited to the examples and the different specific structures presented therein. For example, FPGA circuits are presented as implementing the safety blocks. However, other suitable circuits or circuit structures may also be used.

It will be obvious to a person skilled in the art that, as the technology advances, the inventive concept can be implemented in various ways. The invention and its embodiments are not limited to the examples described above but may vary within the scope of the claims.

## Claims

1. A method of producing a safe torque off procedure of an electrical drive comprising a control unit and one or more power units having controllable semiconductor switches and being able to control a motor of the electrical drive, wherein the method comprises
detecting a signal (STO1, STO2) in the control unit indicating a requirement to stop the drive, the method comprises
generating in the control unit on the basis of the detected signal at least one safety-approved signal (STO12; Enable; Stop) which when received in a power unit initiates shutting-down of the power unit;
feeding the generated at least one safety-approved signal from the control unit to one or more power units, **characterized by** initiating by the one or more power units the shutting down of the one or more power units upon the receipt of the at least one safety-approved signal in the one or more power units, the at least one safety-approved signal initiating at least two different shut-down procedures of the one or more power units that received the at least one safety-approved signal, said shut-down procedures being performed at different time instants.

2. A method according to claim 1, wherein the control unit generates two safety-approved signals, one of them being a signal (ST012) leading the one or more power units to a torque-free state and the other being a signal (Stop; Enable) stopping the one or more power units according to a controlled shutdown procedure.

3. A method according to claim 1, wherein the control unit generates a safety-approved signal (ST012) leading the one or more power units to a torque free state, and wherein the one or more power units generate a signal (Stop; Enable) stopping the one or more power units according to a controlled shutdown procedure on the basis of the received safety-approved signal (ST012).

4. A method according to claim 1, 2 or 3, wherein the signals are transmitted via signal paths carrying the control information between the control unit and the one or more power units.

5. A method according to any one of the previous claim 1 to 4, wherein the power unit, upon receipt of the one or more safety approved signals stops the operation of the power module.

6. A method according to claim 5, wherein the operation of the power module is stopped first according to a controlled shutdown procedure and after that in a manner producing a torque-free state.

7. A method according to claim 6, wherein the torque-free state producing stop is delayed in such a manner, that the power unit is already in a stopped state before applying the torque-free state producing stop.

8. A method according to any one of the previous claims 1 to 7, wherein the one or more safety-related signals are communicated between the control unit and the one or more power units with a protocol differing from the other communication between the units.

9. A method according to any one of the previous claims 1 to 8, wherein the power units receiving control from a control unit drive a common load and the control information from the control unit is the same to all the power units.

10. A method according to any one of the previous claims 1 to 8, wherein the power units receiving control from a control unit receive different control information.

11. A method according to any one of the previous claims 1 to 10, wherein the power units control one or plurality of motors.

12. An arrangement in an electrical drive for producing a safe torque off procedure of an electrical drive comprising a control unit and one or more power units having controllable semiconductor switches and being able to control a motor of the electrical drive, wherein the arrangement comprises
means for detecting a signal (ST01, ST02) in the control unit indicating a requirement to stop the drive, the arrangement comprises
means for generating in the control unit on the basis of the detected signal at least one safety-approved signal (ST012; Enable; Stop) which when received in a power unit initiates shutting-down of the power unit;
means for feeding the generated at least one safety-approved signal from the control unit to one or more power units, **characterized by** means for initiating by the one or more power units the shutting down of the one or more power units upon the receipt of the at least one safety-approved signal in the one or more power units, the at least one safety-approved signal initiating at least two different shut-down procedures of the one or more power units that received the at least one safety approved signal, said shut-down procedures being performed at different time instants.

## Patentansprüche

1. Verfahren zum Herstellen eines Vorgangs des sicher abgeschalteten Moments eines elektrischen Antriebs, umfassend eine Steuereinheit und ein oder mehrere Stromaggregate, die steuerbare Halbleiterschalter aufweisen und einen Motor des elektrischen Antriebs steuern können, wobei das Verfahren Folgendes umfasst
das Erfassen eines Signals (ST01, ST02) in der Steuereinheit, was ein Hinweis auf das Erfordernis ist, den Antrieb zu stoppen, wobei das Verfahren Folgendes umfasst
das Generieren in der Steuereinheit auf der Basis des erfassten Signals
wenigstens eines sicherheitstechnisch zugelassenen Signals (ST012; Freigabe, Stopp), das bei Erhalt in einem Stromaggregat das Ausschalten des Stromaggregats einleitet;
das Einspeisen des generierten, wenigstens einen sicherheitstechnisch zugelassenen Signals von der Steuereinheit an das eine oder die mehreren Stromaggregate,
**gekennzeichnet durch**
das Einleiten des Ausschaltens des einen oder der mehreren Stromaggregate durch die eine oder die mehreren Stromaggregate nach Erhalt des wenigstens einen sicherheitstechnisch zugelassenen Signals in dem einen oder den mehreren Stromaggregaten, wobei das wenigstens eine sicherheitstechnisch zugelassene Signal wenigstens zwei verschiedene Ausschaltvorgänge des einen oder der mehreren Stromaggregate einleitet, welche das wenigstens eine sicherheitstechnisch zugelassene Signal erhalten haben, wobei der Ausschaltvorgang an verschiedenen Zeitpunkten durchgeführt wird.

2. Verfahren nach Anspruch 1, wobei die Steuereinheit zwei sicherheitstechnisch zugelassene Signale generiert, wobei eines davon ein Signal (ST012) ist, welches das eine oder die mehreren Stromaggregate in einen momentfreien Zustand überführt, und das andere ein Signal (Stopp; Freigabe) ist, welches das eine oder die mehreren Stromaggregate gemäß einem gesteuerten Ausschaltvorgang stoppt.

3. Verfahren nach Anspruch 1, wobei die Steuereinheit ein sicherheitstechnisch zugelassenes Signal (ST012) generiert, welches das eine oder die mehreren Stromaggregate in einen momentfreien Zustand überführt, und wobei das eine oder die mehreren Stromaggregate ein Signal (Stopp; Freigabe) generieren, welches das eine oder die mehreren Stromaggregate gemäß einem gesteuerten Ausschaltvorgang auf der Basis des erhaltenen sicherheitstechnisch zugelassenen Signals (ST012) stoppt.

4. Verfahren nach Anspruch 1, 2 oder 3, wobei die Signale über Signalwege übertragen werden, welche die Steuerungsinformationen zwischen der Steuereinheit und dem einen oder den mehreren Stromaggregaten tragen.

5. Verfahren nach einem der vorstehenden Ansprüche 1 bis 4, wobei das Stromaggregat, nach Erhalt des einen oder der mehreren sicherheitstechnisch zugelassenen Signale, den Betrieb des Strommoduls stoppt.

6. Verfahren nach Anspruch 5, wobei der Betrieb des Strommoduls zuerst gemäß einem gesteuerten Ausschaltvorgang und danach in einer Weise gestoppt wird, in der ein momentfreier Zustand hergestellt wird.

7. Verfahren nach Anspruch 6, wobei der momentfreie Zustand, der einen Stopp herstellt, auf solche Weise verzögert wird, sodass das Stromaggregat sich bereits in einem gestoppten Zustand befindet, bevor der den momentfreien Zustand herstellende Stopp angelegt wird.

8. Verfahren nach einem der vorstehenden Ansprüche 1 bis 7, wobei das eine oder die mehreren sicherheitstechnisch zugelassenen Signale zwischen der Steuereinheit und dem einen oder den mehreren Stromaggregaten mit einem Protokoll kommuniziert werden, das sich von den anderen Kommunikationen zwischen den Einheiten unterscheidet.

9. Verfahren nach einem der vorstehenden Ansprüche 1 bis 8, wobei die Stromaggregate, die eine Steuerung von einer Steuereinheit erhalten, eine gemeinsame Last antreiben, und die Steuerungsinformationen von der Steuereinheit an alle Stromaggregate gleich sind.

10. Verfahren nach einem der vorstehenden Ansprüche 1 bis 8, wobei die Stromaggregate, die eine Steuerung von einer Steuereinheit erhalten, verschiedene Steuerungsinformationen erhalten.

11. Verfahren nach einem der vorstehenden Ansprüche 1 bis 10, wobei die Stromaggregate einen oder eine Vielzahl von Motoren steuern.

12. Anordnung in einem elektrischen Antrieb zum Herstellen eines Vorgangs des sicher abgeschalteten Moments eines elektrischen Antriebs, umfassend eine Steuereinheit und ein oder mehrere Stromaggregate, die steuerbare Halbleiterschalter aufweisen und einen Motor des elektrischen Antriebs steuern können, wobei die Anordnung
Mittel zum Erfassen eines Signals (ST01, ST02) in der Steuereinheit umfassen, was ein Hinweis auf das Erfordernis ist, den Antrieb zu stoppen, wobei die Anordnung
Mittel umfassen zum Generieren wenigstens eines sicherheitstechnisch zugelassenen Signals (ST012; Freigabe; Stopp) in der Steuereinheit auf der Basis des erfassten Signals, welches beim Erhalt in einem Stromaggregat das Ausschalten des Stromaggregats einleitet;
Mittel umfassen zum Einspeisen des generierten, wenigstens einen sicherheitstechnisch zugelassenen Signals von der Steuereinheit an ein oder mehrere Stromaggregate,
**gekennzeichnet durch**
Mittel zum Einleiten des Ausschaltens des einen oder der mehreren Stromaggregate durch ein oder mehrere Stromaggregate nach Erhalt des wenigstens einen sicherheitstechnisch zugelassenen Signals in dem einen oder den mehreren Stromaggregaten, wobei das wenigstens eine sicherheitstechnisch zugelassene Signal wenigstens zwei verschiedene Ausschaltvorgänge des einen oder der mehreren Stromaggregate einleitet, die das wenigstens eine sicherheitstechnisch zugelassene Signal erhalten haben, wobei die Ausschaltvorgänge an verschiedenen Zeitpunkten durchgeführt werden.

## Revendications

1. Procédé de production d'une procédure d'arrêt de couple sans danger d'un entraînement électrique comprenant une unité de commande et une ou plusieurs unités de puissance présentant des commutateurs à semi-conducteurs commandables et étant aptes à commander un moteur de l'entraînement électrique, dans lequel le procédé comprend
la détection d'un signal (ST01, ST02) dans l'unité de commande indiquant une exigence d'arrêt de l'entraînement, le procédé comprend
la génération dans l'unité de commande sur la base du signal détecté d'au moins un signal homologué en termes de sécurité (ST012 ; Enable, Stop), qui lorsqu'il est reçu dans une unité de puissance initie l'arrêt de l'unité de puissance ;
la fourniture du au moins un signal homologué en termes de sécurité généré de l'unité de commande à une ou plusieurs unités de puissance,
**caractérisé par**
l'initiation par l'une ou les plusieurs unités de puissance de l'arrêt de l'une ou des plusieurs unités de puissance suite à la réception de l'au moins un signal homologué en termes de sécurité dans l'une ou les plusieurs unités de puissance, l'au moins un signal homologué en termes de sécurité initiant au moins deux différentes procédures d'arrêt de l'une ou des plusieurs unités de puissance qui ont reçu l'au moins un signal homologué en termes de sécurité, lesdites procédures d'arrêt étant réalisées à différents instants.

2. Procédé selon la revendication 1, dans lequel l'unité de commande génère deux signaux homologués en termes de sécurité, dont un est un signal (ST012) menant l'une ou les plusieurs unités de puissance à un état sans couple et l'autre est un signal (Stop ; Enable) arrêtant l'une ou les plusieurs unités de puissance selon une procédure d'arrêt commandée.

3. Procédé selon la revendication 1, dans lequel l'unité de commande génère un signal homologué en termes de sécurité (ST012) menant l'une ou les plusieurs unités de puissance à un état sans couple, et dans lequel l'une ou les plusieurs unités de puissance génèrent un signal (Stop, Enable) arrêtant l'une ou les plusieurs unités de puissance selon une procédure d'arrêt commandée sur la base du signal homologué en termes de sécurité reçu (ST012).

4. Procédé selon la revendication 1, 2 ou 3, dans lequel les signaux sont transmis par le biais de voies de signal acheminant les informations de commande entre l'unité de commande et l'une ou les plusieurs unités de puissance.

5. Procédé selon l'une quelconque des revendications précédentes 1 à 4, dans lequel l'unité de puissance, suite à la réception de l'un ou de plusieurs signaux homologués en termes de sécurité arrête le fonctionnement du module de puissance.

6. Procédé selon la revendication 5, dans lequel le fonctionnement du module de puissance est arrêté tout d'abord selon une procédure d'arrêt commandée et après celle-ci de manière à produire un état sans couple.

7. Procédé selon la revendication 6, dans lequel l'arrêt produisant l'état sans couple est différé de telle manière que l'unité de puissance soit déjà dans un état arrêté avant l'application de l'arrêt produisant l'état sans couple.

8. Procédé selon l'une quelconque des revendications précédentes 1 à 7, dans lequel l'un ou les plusieurs signaux liés à la sécurité sont communiqués entre l'unité de commande et l'une ou les plusieurs unités de puissance avec un protocole différant de l'autre communication entre les unités.

9. Procédé selon l'une quelconque des revendications précédentes 1 à 8, dans lequel les unités de puissance recevant la commande d'une unité de commande entraînent une charge commune et les informations de commande de l'unité de commande sont les mêmes que toutes les unités de puissance.

10. Procédé selon l'une quelconque des revendications précédentes 1 à 8, dans lequel les unités de puissance recevant la commande d'une unité de commande reçoivent différentes informations de commande.

11. Procédé selon l'une quelconque des revendications précédentes 1 à 10, dans lequel les unités de puissance commandent une ou une pluralité de moteurs.

12. Agencement dans un entraînement électrique pour la production d'une procédure d'arrêt de couple sans danger d'un entraînement électrique comprenant une unité de commande et une ou plusieurs unités de puissance présentant des commutateurs à semi-conducteurs commandables et étant aptes à commander un moteur de l'entraînement électrique, dans lequel l'agencement comprend
un moyen pour détecter un signal (ST01, ST02) dans l'unité de commande indiquant une exigence d'arrêt de l'entraînement, l'agencement comprend
un moyen pour générer dans l'unité de commande sur la base du signal détecté au moins un signal homologué en termes de sécurité (ST012 ; Enable ; Stop) qui lors de la réception dans une unité de puissance initie l'arrêt de l'unité de puissance ;
un moyen pour alimenter l'au moins un signal homologué en termes de sécurité généré de l'unité de commande à une ou plusieurs unités de puissance,
**caractérisé par**
un moyen pour initier par l'une ou les plusieurs unités de puissance l'arrêt de l'une ou des plusieurs unités de puissance suite à la réception de l'au moins un signal homologué en termes de sécurité dans l'une ou les plusieurs unités de puissance, l'au moins un signal homologué en termes de sécurité initiant au moins deux procédures d'arrêt différentes de l'une ou des plusieurs unités de puissance qui ont reçu l'au moins un signal homologué en termes de sécurité, lesdites procédures d'arrêt étant réalisées à différents instants.
